# EUROPEAN PATENT APPLICATION

(11) **EP 1 352 841 A1**
(43) Date of publication of application: **15.10.2003**
(21) Application number: 02076443.7
(22) Date of filing: 12.04.2002
(51) Int. Cl.: B65D 21/04, B65D 77/04, B64D 11/00, A47J 39/00

(54) **Ovenable stackable and nestable trays and industrial catering method using these trays**

(71) Applicant: SOCIETE DES PRODUITS NESTLE S.A., 1800 Vevey (CH)
(72) Inventor: Ducharme, Camille, 1807 Blonay (CH); Indekeu, Eric, 2100 Deurne (BE); Geens, Patrick, 3060 Bertem (BE); De Neuburg, Wouter, 2600 Berchem (BE)
(74) Representative: Thérond, Gérard Raymond

(57) **Abstract**

The method allow frozen cooked or pre-cooked food products to be packaged and transported from a manufacturing location to a catering location where they are reheated in stackable trays 20 for packaging, transport and reheating, which can be nested inside each other after use. The trays (20) are designed with sloped portions (26) and openings (31, 32, 36, 37 and 38) allowing said products to be uniformly reheated.

## Description

The present invention concerns a method intended for industrial catering for conveniently and hygienically packaging, transporting to a catering location and serving food products using sets of stacked trays where each set of trays will be preheated in a conventional hot air oven before the food products are distributed, the empty trays then being able to be nested inside each other to occupy less space.

A certain number of methods are already known in the catering industry for facilitating the packaging and transportation of food products from a total or partial manufacturing location to a catering location where said products can undergo final preparation.

In the airline catering, the food products to be reheated are traditionally supplied on board on metal trays that are slidably inserted in securely closed metal tray inserts for transport and boarding. A caterer has to manipulate the food to put it on trays. Those inserts usually fit within galleys of the in-flight cabin. Once it is time for consumer service, the tray inserts are opened, then, the trays are individually removed and slipped into the cavity of an oven which is provided with receiving support means to receive each individual tray. The support means in the cavity are placed at sufficient vertical distance to allow hot air to circulate between the trays. When heating has been achieved, the food items are individually transferred in baskets or any suitable serving container for passing them around to the passengers. The trays are then reinstalled empty in the trays inserts that are replaced in the galleys before the landing.

This traditional method requires too much handling and time both for the caterer and the in-flight service staff. Furthermore, too much space must be allocated in the catering cabin for those tray inserts even after they have been emptied from the food. These inserts are also heavy and can usually only be inserted at the floor level of the galley. Finally, the air circulation around the trays might not be optimal as the support means might not be optimally placed in the oven depending on the nature and size of the food product to be reheated.

US Patent No. 4,269,169 discloses a method wherein the trays, which are sealed by a cover, can be stacked on top of each other in a container which is open on one side and has orifices allowing hot air to circulate in the spaces between the trays, these spaces being obtained by legs located at the base and resting on the cover of the subjacent tray. The trays and the container have a generally pentagonal shape so that the volume of a conventional oven with a rectangular base plate cannot be used in an optimum manner, which constitutes a drawback when reheating prior to consumption has to be carried out in a confined space, as is the case in the foodservice location of an aircraft. These containers are in fact intended to be introduced into a special rotary circular oven, disclosed in US Patent No. 4,625,867, such ovens also having the drawback of requiring more space than a conventional oven. It will also be observed that the individual sealing of each tray, which is required in order to stack said trays and because the container is not hermetic at all, contributes to increasing the cost of the final product.

In US Patent No. 4,384,191, filed by the same author subsequently to the two aforecited patents, the container, which is still provided with orifices, has a conventional parallelepiped shape having, on either side of its opening, in a conventional manner, rails or shelves enabling ordinary sealed trays to be positioned without touching each other, one or more warm air generators being arranged between the containers after they are introduced into a heating chamber.

This method has substantially the same drawbacks as before, in that it requires individual sealing of the trays and a special heating installation.

It will be observed that the aforementioned methods enable the trays to be nested after use but does not allow them to be stacked for reheating without having to use additional means.

Within the field of palletisation, for moving finished or semi-finished products from a manufacturing location to a delivery or sales location, without said products having to undergo any transformation on the actual pallets, there exist numerous devices, all relying on the same principle and allowing the pallets to be stacked when they contain products and to be nested when they are empty. In accordance with this principle, all the pallets, or equally all the trays, have the same shape with flared walls allowing them to be stacked but having two opposite sides with complementary shapes allowing them to be stacked head to tail which leaves a space free for arranging products. For example, one may cite US Patent Nos. 4,522,301 and 5,896,992.

US Patent No. 4,522,301 discloses a process consisting of forming raw croissant dough in open cells of plastic trays where they are frozen, the plates being then stacked head to tail and packaged in a carton to be delivered for example to a baker's where the frozen raw croissants will be emptied onto the shelves of an oven to be cooked, all the trays then being turned the same way to be nested.

For transporting pastries or bread products, US Patent No. 5,896,992 discloses flat-bottomed rectangular cases the small sides of which have complex complementary shapes allowing them to be stacked on top of each other when they are arranged head to tail and to be nested inside each other when they are all placed in the same direction.

The present invention thus concerns a method which, with minimum handling, allows food products, arranged in a stacked trays assembly to be both packaged and transported conveniently and hygienically from a manufacturing location, where the products are cooked or pre-cooked and possibly frozen, to a catering location, where said trays are placed in a conventional oven to reheat the products prior to distribution.

The invention also concerns the trays themselves, the shape of which has been designed to allow them to be easily stacked/nested, to enable food products which may have the same or slightly different dimensions to be reheated uniformly, and to allow the products in the trays to be easily removed after reheating for distribution.

The method according to the invention is thus characterised in that the trays can withstand heat and are stackable to form at least one stack of trays whose shape and size is such that one or more stacks can be placed inside the oven of a catering location, in that the stack of trays leaves free spaces between each tray to promote the circulation of hot air around the food products, and in that the trays are kept stacked in an outer package for transport to the catering location that can maintain the integrity of the stack

The protective package, which may preferably be a carton or a shrink-wrapped plastic film, is removed before introducing the stack of trays into the oven.

For airline catering applications, the outer carton is preferred as it allows an easy palletisation from the manufacturing point and eliminates handling at the caterers except the pure logistic of receiving, storing and boarding the cartons and brings the on-board handling to an absolute bare minimum.

The protective package may further include easy-opening means to aid in unpacking the stack of trays from the outer package. Those means may also be arranged to facilitate the arrangement of the stack of trays in the oven while requiring as less handling as possible. For instance, the easy opening means may be formed of at least one tear line that demarcates at least one sufficient opening portion in the carton to remove the stack of trays in one block. In an even preferred aspect, the easy opening means comprise tear-off portions on the front and rear panels of the carton of sufficient size to enable the whole stack of trays to be slipped in the oven upon exerting a simple push on it.

When the food products, which are for example small frozen pre-cooked portions, have reached the right temperature for consumption in the oven, the trays are separated from each other to allow the products to be served in the catering location, and the empty trays can be nested inside each other to reduce the storage volume.

Owing to the economic advantages which it provides, this method is suitable for any type of catering location, such as a company restaurant or school canteen. Because of the advantages it provides also as regards handling and reduction in space requirement, it is still better suited to the service of hot food items to airline passengers for breakfast, lunch or dinner.

In order to implement the method, wherein the trays are stacked on top of each other when they contain food products and nested inside each other when they are empty, the trays have opposite complementary support means which fit inside each other when the trays are all in the same direction and which are superimposed to each other when the trays are oriented at 180° with respect to each other, leaving wide air inlets between the sides which do not form the support. Therefore, one important aspect of the invention is to take advantage of this support means to create a space between the trays in this stacking configuration that promotes hot air circulation from the oven. In order to reheat the food products arranged in the trays as evenly as possible, the trays can also include openings through the support means and/or through the bottom.

Even reheating is further improved by forming a succession of sloped portions in the bottom such that the edges of each product to be reheated are also placed in the hot air flow of the oven. This variant also has the advantage of improving the display, arrangement and grasping of hand-held food items. It also give the advantage of being able to fill the trays with products which by nature or due to cooking, will have substantially different dimensions.

In another possible embodiment, the trays are stacked one on top of the other by means of removable intermediate spacing means arranged to leave air circulation paths between each tray. The intermediate spacing means may preferably be made of a low-cost, disposable material such as cardboard and the like. The spacing means are shaped to let hot air circulate between the trays in the oven so that an homogeneous and quick heating of the food items can successfully be achieved.

It will be observed that these trays may be made of a material which enables them to be reused, for example, aluminium. However, according to a preferred embodiment, said trays are made of a disposable or recyclable material, such as a plastic material or ovenable paperboard able to withstand a temperature of up to 230°C. This offers the further advantage of providing a light product open to numerous design variations, by the choice of colours of the material used, or by adding marks or logos to the sides of the trays, such marks being representative of the products contained in the tray, the supplier or suchlike. The trays can be made of injection moulded or thermoformed plastics. Suitable foodgrade plastics are those that can withstand temperatures up to 230°C during at least 30 minutes, preferably 1 hour, while substantially maintaining good mechanical characteristics. Preferred plastics may be chosen among the group of heat resistant food grade polymers or copolymers consisting of a crystalline terephtalate polyethylene (CPET), polycarbonate, polyetherimide, polyimide, polyetherkeytone (PEEK), fluoropolymers, polyphtalamide, polyphenylene sulfides, polyether sulfone, polyaryl sulfones, polypropylene and mixtures and co-polymers of these thermoplastics. The material could also be made of a thermosetting polymers such as a polyester or epoxide resin.

Other features and advantages of the present invention will appear more clearly upon reading the following description of a preferred embodiment for implementing the method according to the present invention, this description being made with reference to the annexed drawings, in which:
- Figure 1 is a diagram schematically showing the different steps of the method according to the invention;
- Figure 2 shows a first embodiment of a stack of trays properly filled in with food items packaged in a carton;
- Figure 3 in perspective shows an isolated tray of the stack of figure 2;
- Figure 4 is a top view of the tray shown in Figure 3;
- Figures 5 and 6 show respectively, in perspective and in side view, two trays stacked on top of each other,
- Figures 7 and 8 show respectively, in perspective and in side view, two trays nested inside each other;
- Figure 9 shows a tray containing two small portions of food products;
- Figure 10 shows the easy loading of the trays in the oven;
- Figure 11 shows a second embodiment of a stack of trays according to the invention, and
- Figure 12 shows in perspective an isolated tray assembly of figure 11.

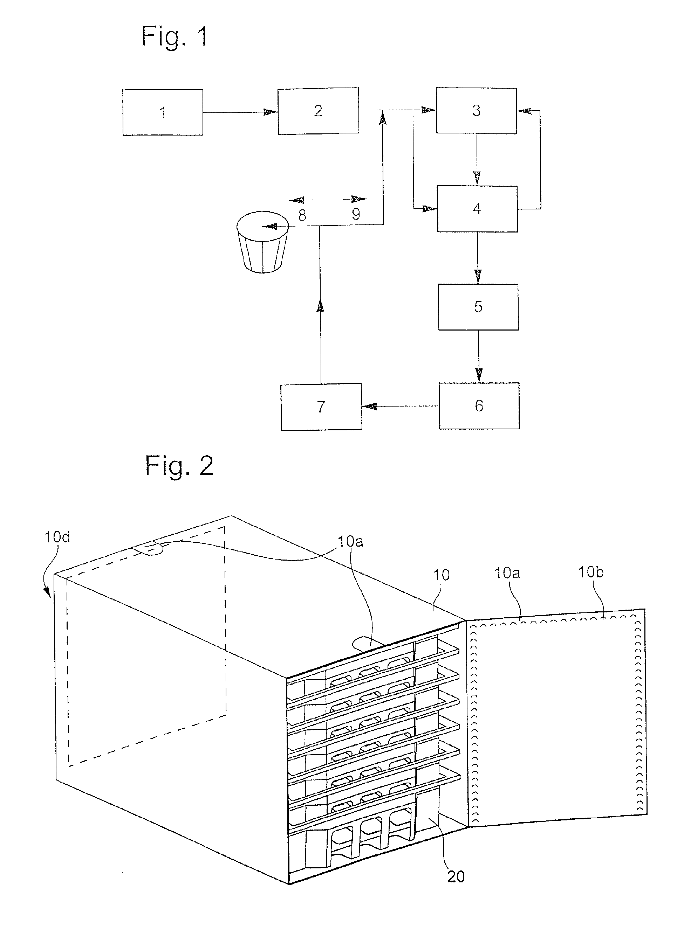

The diagram of Figure 1 schematically describes the steps of the method according to the invention. Products 1 for manufacturing food products are delivered to a preparation unit 2, outside catering location 7, where they are cooked, or pre-cooked. They may be, for example, products for breakfast (Viennoiserie, Danish pastries, croissants, etc.), lunch or dinner (calzone, pizzas, quiches, etc..), or any other pastry or bread products, or baked or fried products which freeze and regenerate well in a convection oven. After preparation, in a following step 3, the products may be individually wrapped in a flow wrap or paperboard sachet then arranged in trays and are then deep frozen in step 4; equally the products may be deep frozen first and then placed in the trays. In an alternative, the food products may be directly placed in the trays without individual packaging.

Deep freezing may be carried out by any suitable means such as by rapidly cooling to the required temperatures, i.e., minus 18 to 40°C in a spiral freezer or in a freezing tunnel under liquid nitrogen jets or any other suitable freezing technology. In all case, the cold chain should be maintained all the way through the preparation to the delivery to the catering location by storing the packages in freezers in order to ensure safe and hygiene conditions.

In the following step 5, the trays are stacked head to tail on top of each other and packaged in a packaging, for example in a carton able to contain 5 to 10 trays, the packaging then being closed to firmly maintain the stack of trays in position. The cartons are then brought to the foodservice location 6 of a catering location 7, where the stacked trays are removed from their packaging and reheated in a convection oven, then separated from each other to be distributed in catering location 7, for example to the passengers of an aircraft. The tray may be either directly handled with a heat protecting glove for being directly used as a serving tray to the passengers or, alternatively, be fitted in a larger insulation basket that holds the tray. When the trays are empty, they are nested inside each other to occupy a minimum of space to then be either thrown away 8, or reused 9 after preparation unit 2.

The method thus allows hot or warm food products to be served conveniently and hygienically, in particular in locations where the preparation space and storage space before and after use are limited.

In order to make this method even more efficient, the shape of the trays has been optimised, as explained in the following description.

Figure 2 shows a carton 10 in which, for instance, seven trays 20 are stacked with the food items properly placed therein, the carton including a front panel 10a able to be closed, for example by means of adhesive strips or glue which are not shown. The dimensions of carton 10 depend on those of the trays, and of those of the reheating oven. The dimensions and shape of the carton are determined to provide a sufficiently tight enclosure around the stack of trays that maintains the stack in place even in turbulent conditions of transport. The carton may preferably be sufficiently closed with as less holes or openings as possible, although this is not an absolute requirement, but to ensure a greater degree of hygiene and play an effective thermal insulation barrier. For instance, a carton 10 may measure for example 40x40x25 cm, with a thickness of between 1 to 20 mm, which allows it to be easily handled, although other types of packaging can be envisaged with a smaller or greater number of trays.

The carton may advantageously comprise means for facilitating the arrangement of the stack of trays in the oven while requiring as less handling as possible. Preferably, both the front and rear panels 10a, 10d have a tear-off portion with tear or perforated line 10b that upon tearing off is capable of removing a sufficiently wide portion of the carton to let the stack of trays easily slipping through one opening upon pushing is exerted on the stack. The tear line may be advantageously combined with a precut zone 10c preferably provided in the vicinity of an edge of the carton at or close to the periphery of the tear line.

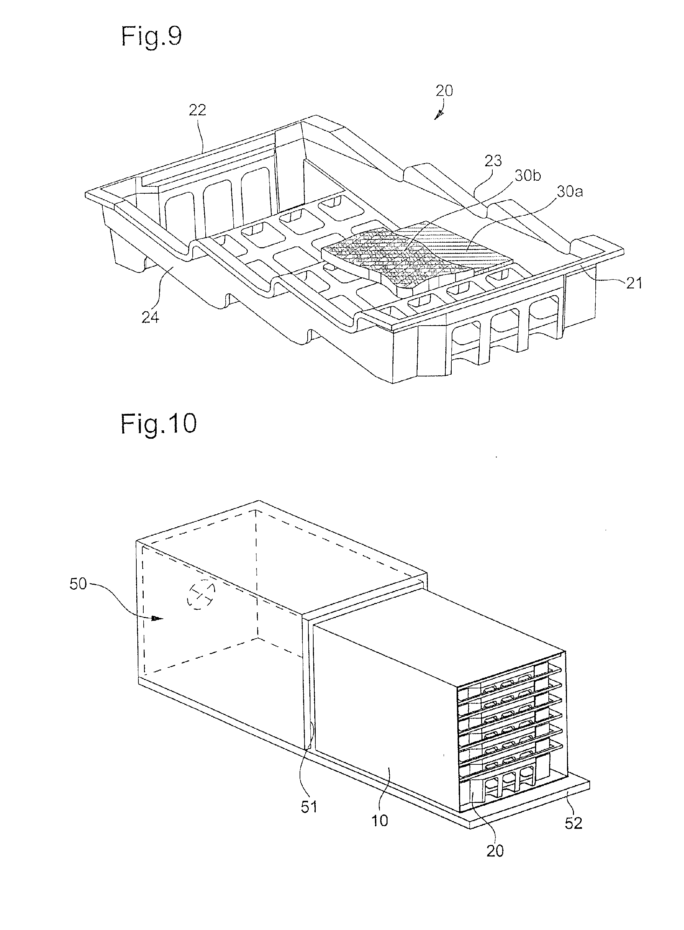

As shown in Fig. 10, when the operator needs to load the stack of trays in the oven, her (or she) tears off the tear portions in the front and rear panels. The carton can be placed in front of the cavity 51 of oven 50 such, as on a planar support surface 52, with the rear of the carton facing the cavity of the oven. The user can then push on the whole stack of trays, in direction A, to slip it in right in the oven. The carton is then thrown away.

The trays and their complementary support means are preferably designed, dimensioned and shaped so that upon arranging a desired number of trays in a stack, the resulting stack of trays fits, at best, an available room in the cavity of the oven. Of course, depending on the oven, its cavity may accommodate a single stack of trays or, alternatively two or more stacks of trays placed in parallel.

It is also for example possible to keep the trays stacked with a shrink-wrapped plastic film alone or in combination with an outer carton especially if the food items in the trays are not individually packed in a flow wrap

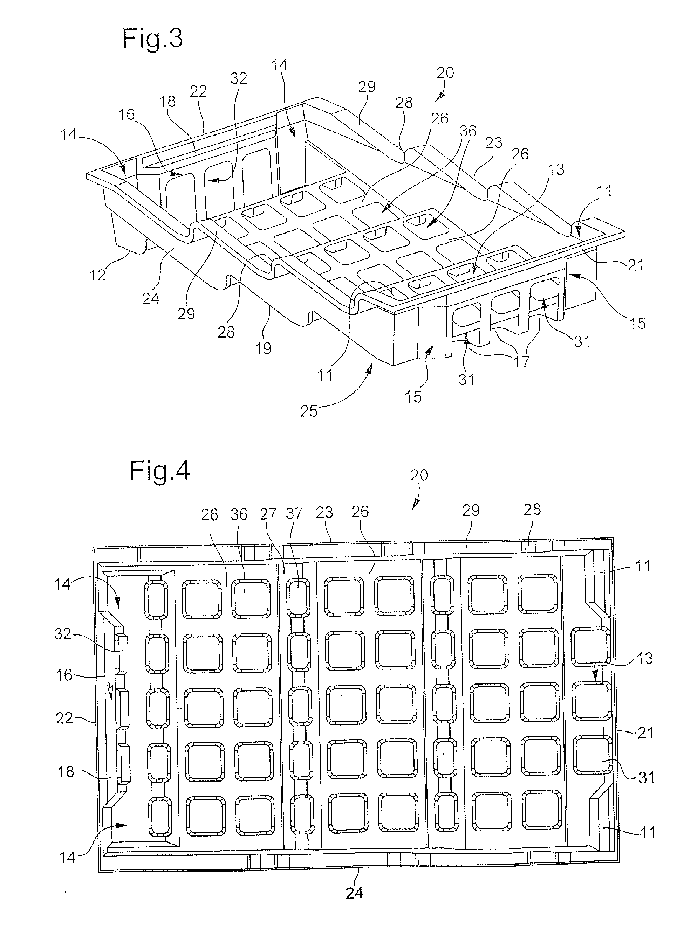

The trays have in fact been designed with simple shapes allowing them to be manufactured economically, for example by heat moulding a plastic material, such as crystalline terephtalate polyethylene (CPET), polyamide, polyimide, PEEK or other suitable heat resistant polymers or copolymers or by shaping an ovenable paperboard withstanding temperatures of up to 230°C. Depending upon the choice of the polymer(s) or copolymer(s) for the trays, the moulding process may be carried out by injection moulding, compression moulding, thermoforming or injection-compression moulding. With reference to Figures 3 and 4, showing the preferred embodiment, it can be seen that a tray 20 has the shape of a rectangular case including two small sides 21, 22, two large sides 23, 24 and a bottom 25.

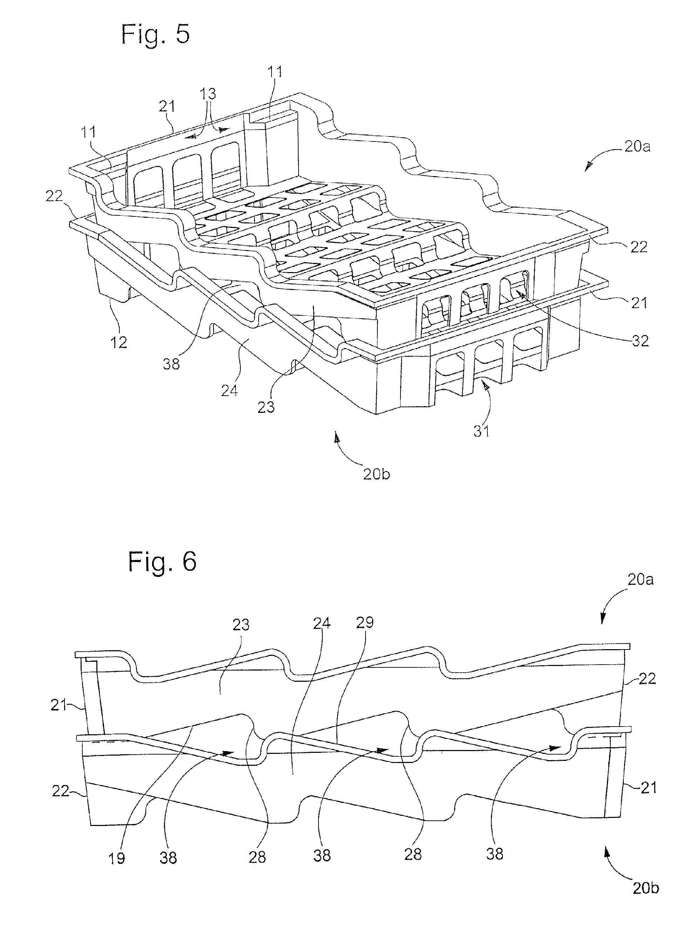

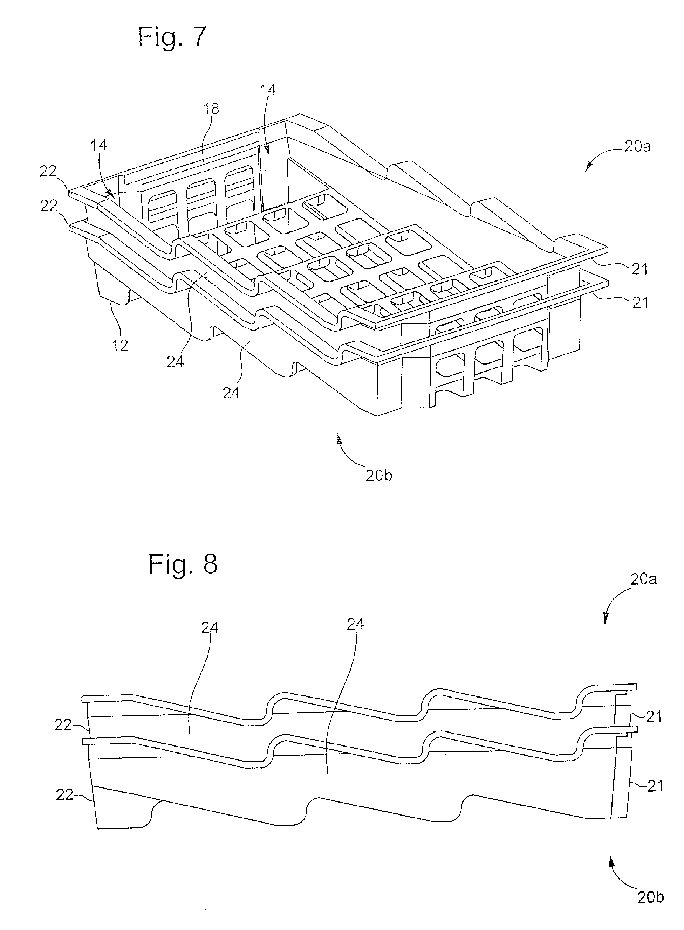

Also with reference to Figures 5 to 7, it can be seen that the two small sides 21, 22 of tray 20 have complementary shapes allowing them to be stacked on top of each other, as shown in Figure 5, when they are oriented head to tail with respect to each other, or to nest them inside each other as shown in Figure 7, when they are all oriented in the same direction.

On its inner face close to the edges joining large sides 23, 24, the small side 21 has two small shelves 11 separated by a space 13 to form, on the outer part of small side 21, two recesses 15 of complementary shape to that of small shelves 11, these recesses 15 delimiting on bottom 25 a support zone 17. The opposite small side 22 has, in a complementary manner, in its inner face close to its edges joining the large sides 23 and 24, two recesses 14 of substantially complementary shape to that of small shelves 11, these recesses 14 being joined by a support strip 18 of the same shape as support zone 17 at the base of small side 21. The support strip 18 delimits in the outer surface of small side 22, a recess 16 of substantially identical shape to that of support zone 17 of the other small side 21. The recesses 14 are closed on the bottom side to form legs 12 which will rest on small shelves 11 when the trays are stacked head to tail, support zone 17 then resting on support zone 18, as shown in Figures 5 and 6 for two trays 20a, 20b. Conversely, as shown in Figures 7 and 8, when trays 20 are all oriented in the same direction, they nest inside each other. For small side 22, legs 12 engage in recesses 14 and the inner shape delimited by support strip 18 engages in recess 16. The same is true of small side 21 with complementary shapes 11/15 and 13/17. The shape, size and dimensions of the complementary support means may greatly vary without departing from the spirit of the invention. In particular, those attributes may be determined so as to optimise the volume available for the food inside the tray while not being detrimental to the stability of the stacked assembly.

Returning to Figures 3 and 4, it can be seen that bottom 25 is formed by a succession of slightly sloping portions 26 connected to each other by almost vertical strips 27, these sloping portions 26 and strips 27 being respectively provided with venting means 36 and 37. Likewise openings 31 and 32 are provided in small sides 21, 22. It can also be seen that large sides 23, 24 have upper and lower edges form series of indentations 28a, 28b with a substantially identical or similar profile to that of the bottom, with sloping portions 29, 19, connected by substantially vertical portions 28.

As can be seen in Figures 5 and 6, when two trays 20a, 20b are stacked, edges of large sides 22, 23 delimit the openings 38 between portions 19, 28 and 29.

The indentations 28a, 28b of the upper and lower edges take position so that when the trays are properly stacked in a head-to-tail configuration, the indentations are substantially vertically aligned so as to leave side openings 38 in number and section sufficient for the air to circulate at the upper surface of each array of food items. Furthermore, the section of the side openings 38, as obtained from the stacked arrangement of trays, progressively widens from the bottom of the sloping portions to the top of the sloping portions, therefore providing an homogeneous air circulation all along the upper surface of the food items.

All the openings 31, 32, 36, 37 and 38 provided in these trays thus allow hot air to circulate very easily between small portions 30a, 30b, etc. arranged on bottom 25, at least around four faces if the small portions have the shape of rectangular rods, as shown in Figure 9. It can also be seen that this configuration allows food items such as preferably hand-held snacks 30a, 30b of substantially different lengths to be arranged, which allows a reduced assortment of trays to be obtained for a wide range of food products to be reheated.

The number of vent means and their distribution through the tray surfaces may be determined as a function of the size of food items to be placed in the trays so as to achieve a quick and uniform reheating of the food items while avoiding cold or, conversely, too hot spots. In particular, the number of vents should be sufficient so that each individual food items placed in the tray should be correctly vented. Preferably, the food supporting surface area to vent surface area for each individual tray should preferably be within a range of 3:1 to 1:10, even more preferably 2:1 to 1:5.

The venting of the trays is also determined to form both vertical and horizontal air paths provided in a sort of matrix configuration that enables to uniformly raise the temperature of a plurality of vertical layers of arrays of discrete food items as arranged in the stacked trays. This effective air circulation enables to raise the food temperature from negative or chilled temperatures to a minimum of about 60°C, more preferably at least 70°C, at core of the food items, in less than 15 minutes, even preferably less than 12 minutes.

The invention provides numerous advantages such as:
a) A better and more hygienic food delivering method to foodservice locations with no direct handling of the food itself until the consumer serves him- or herself,
b) b) A more efficient, less cumbersome, easy-to-serve and preferably disposable, food delivery system that provides more convenience to the in-flight operators when boarding, passing around the food to the passengers and cleaning the food service cabin before landing,
c) A tray arrangement that enables optimization of the spacing and venting for hot air circulation depending upon the nature and size of the food items to be regenerated in the oven,
d) A more secured package that can go through the security check points of airports, in particular metal detectors, more easily as compared to the usual metal tray inserts as the package may be made of disposable, X-ray transparent materials and is intended for first opening only once on board in the aircraft when the food is ready to be reheated in the oven.
e) An improved fitting with airline trolleys and overhead galley containers when packed in outer carton and better use of allocated space within a standard aircraft oven considering product size/dimensions and heating performance.

### Example:

Seven trays of the type as described and illustrated in Figs. 3 to 9 were assembled with frozen prebaked Calzone type snacks. Each tray contained an average of 15 snacks with about 5 snacks per array. The snacks individually weighted of from 50 to 80 grams. The trays was then placed as a stack of trays in an airline convection oven of the type commercialised by B/E Aerospace. The average temperature in a prewarmed oven as controlled by a thermostat was set at 200 °C. It took about 8 to 10 minutes to regenerate the snacks to a serving temperature in core of about 77°C. All snacks were evenly heated within the trays within a +/-5°C temperature range. The snacks did not experience any cold spot.

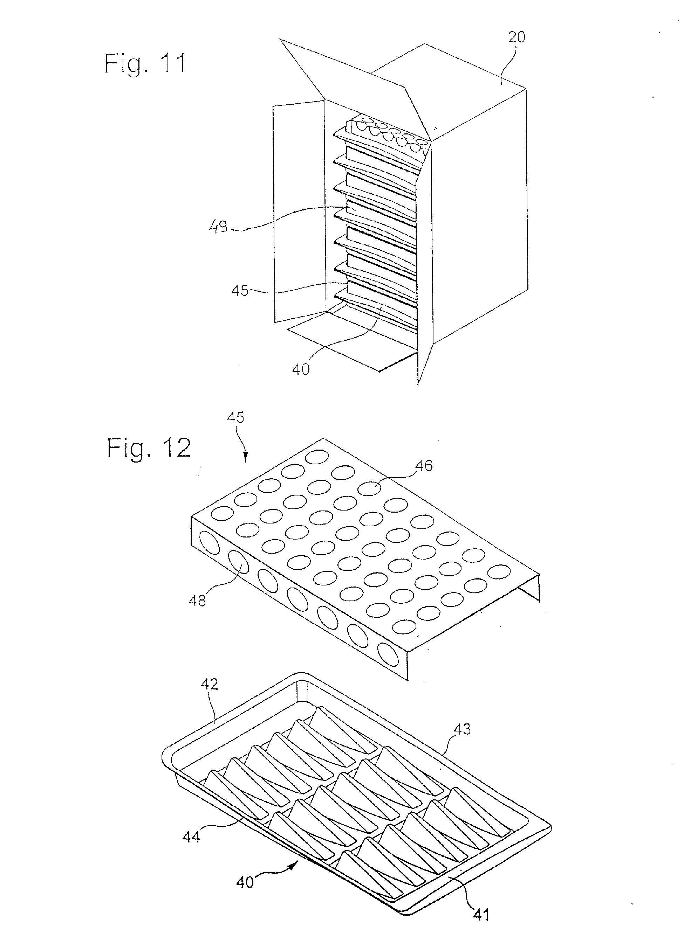

Figures 11 and 12 show a second embodiment of the tray assembly according to the invention which differs from the first embodiment described above in that the stacking/nesting is obtained by means of a two part arrangement. As illustrated in figure 11, trays 40 are still stacked for example in a A box type carton 10, but they are spaced one from each other by reversed U-shaped spacing means 45 made for example of carton. These reversed U-shaped spacing means has sidewalls that engage in the bottom of the large sides 43, 44 of a lower tray 40 in the stack which extend upwardly beyond the level of the tray's circumferential edges to form a tunnel 49 for circulating hot air in the direction of the small sides 41, 42. The spacing means 45 forms an upper flat support surface that provide support to an upper tray in the stack. Optionally the top and sides of the U-shaped spacing means may be provided with openings 46, 48. Thus, when the trays 40 are removed from the oven, the U-shaped spacing means are folded and thrown away, and when the trays 40 are empty, they may be nested whatever are their orientation. Like in the first embodiment the bottom of the trays 40 may be provided with sloped portions in array and/or openings. The spacing means may also be configured with four to six sides such as an elongated box comprising evenly distributed vents. The spacing means are preferably made of low cost, disposable material such as preferably cardboard or paperboard material that can withstand heat in the oven.

## Claims

1. Method for conveniently and hygienically providing warmed food items in a catering location, while reducing handling, comprising providing a packaged tray assembly for a plurality of individual trays adapted to accommodate series of food items,
wherein the trays are ovenable and stackable to form at least one stack of trays of a predetermined size and shape that fits at least in a part of an oven cavity of a catering location, wherein the stack of trays forms spaces between each tray to promote hot air circulation inside the trays.

2. Method according to claim 1, wherein the stack of trays are packed inan outer protective package that maintains the integrity of the trays in the stacked configuration for transport to the catering location.

3. Method according to claim 2, wherein the tray assembly is removed from its outer protective package for heating in the oven.

4. Method according to any of the preceding claims, wherein the individual trays are dismantled from the stack of trays after heating has been carried out in the oven to serve the food items from the trays.

5. Method according to any of the preceding claims, wherein the empty trays are capable of being nested together in a nesting configuration of reduced space after the food items have been served from the trays.

6. Method according to any of the preceding claims, wherein the food items are individual frozen hand-held snacks.

7. Method according to any of the preceding claims, wherein the catering location is an aircraft catering.

8. A packaged food tray assembly for convenient transporting, reheating and serving of warmed food items in a catering location comprising :
- series of food items,
- a plurality of individual trays with a bottom adapted to accommodate the series of food items,
wherein the trays are ovenable and stackable to form at least one stack of trays of a predetermined size and shape that fits at least in a part of an oven cavity in a foodservice location of the catering location, wherein the stack of tray forms spaces between each tray to promote hot air circulation inside the trays, and
- a disposable outer protective package that maintains the integrity of the trays in the stacked configuration for transport to the catering location.

9. A packaged food tray assembly according to claim 8, wherein the trays have complementary opposite shaped support means that enable the trays to be stacked one on top of the other at an orientation of 180 degrees with respect to each other to form sufficient room for the food items and for air circulation, and to be nested inside each other when the trays are empty and reoriented all in the same direction to reduce storage space.

10. A packaged food tray assembly according to claim 8, wherein the trays are stacked one on top of the other by means of intermediate spacing means arranged to leave air circulation paths between each tray.

11. A packaged food tray assembly according to claim 8 or 9, wherein the trays when in stacked configuration leave large air inlets on the side of the trays that promote hot air circulation inside the trays.

12. A packaged food tray assembly according to claim 11, wherein the large inlets are formed between support means for stacking the trays one on another and the upper edges of the sides of the trays.

13. A packaged food tray assembly according to any one of claims 8 to 12, wherein the bottom of the trays have venting means that further promote air circulation in a vertical direction.

14. A packaged food tray assembly according to any one of claims 8 to 13, wherein each individual tray has means that promote display and convenient handling from the consumer of the food items in the tray.

15. A packaged food tray assembly according to any one of claims 8 to 14, wherein the support means are sloped portions the bottom of each tray is provided with sloped portions distributed in arrays.

16. A packaged food tray assembly according to any one of claims 8 to 15, wherein the trays are made of disposable or recyclable plastic or paperboard material that withstands heating in the oven.

17. A packaged food tray assembly according to claim 16, wherein the trays are made of a polymer or copolymer that withstands heating at a temperature up to 250°C during at least 30 minutes.

18. A packaged food tray assembly according to claim 17, wherein the plastic material is a crystalline terephtalate polyethylene (CPET), polycarbonate, polyetherimide, polyimide, polyetherkeytone (PEEK), fluoropolymers, polyphtalamide, polyphenylene sulfides, polyether sulfone, polyaryl sulfones, polypropylene and mixtures and co-polymers of these thermoplastics.

19. A packaged food tray assembly according to any one of claims 8 to 18, wherein the outer package is a carton comprising an easy opening device including at least one tear line that demarcates at least one sufficient opening portion in the carton to facilitate removal of the stack of trays in one block.

20. A packaged food tray assembly according to claim 19, wherein the easy opening device comprises tear-off portions on the front and rear panels of the carton of sufficient size to enable the whole stack of trays to be slipped in the oven upon exerting a simple push on the stack.
